# FASCICULE DE BREVET EUROPEEN

(11) **EP 0 965 571 B1**
(45) Date de publication et mention de la délivrance du brevet: **23.07.2003**
(21) Numéro de dépôt: 99401494.2
(22) Date de dépôt: 17.06.1999
(51) Int. Cl.: C03C 17/245, C03C 17/34, C03C 3/078

(54) **Procédé de dépôt d'une couche à base d'oxyde métallique sur un substrat verrier, substrat verrier ainsi revétu**
Verfahren zum Abscheiden einer Metalloxid-Dünnschicht auf einem Glassubstrat, so beschichtetetes Glassubstrat
Process for the deposition of a metal oxide layer on a glass substrate, coated glass substrate

(30) Priorité: 19.06.1998 FR 9807769
(43) Date de publication de la demande: 22.12.1999
(73) Titulaire: SAINT-GOBAIN GLASS FRANCE, 92400 Courbevoie (FR)
(72) Inventeur: Joret, Laurent, 75011 Paris (FR); Berthelot, Isabelle, 93600 Aulnay sous Bois (FR)
(74) Mandataire: Renous Chan, Véronique

(56) Documents cités:
- EP-A- 0 518 755
- EP-A- 0 795 522
- EP-A- 0 857 700
- WO-A-93/12892
- WO-A-96/11887
- WO-A-96/11888
- FR-A- 2 736 632
- US-A- 4 859 496

## Description

La présente invention est relative à un procédé de dépôt d'une couche à base d'oxyde métallique sur un substrat verrier. Elle concerne également le substrat verrier selon ce procédé et ses applications.

Il est bien connu de l'état de l'art d'avoir recours aux techniques dites de " pyrolyse " pour revêtir un substrat de verre d'une ou plusieurs couches minces, et ce, dans le but de lui conférer des propriétés particulières, notamment électriques, thermiques, mécaniques, etc...

Ces techniques consistent à projeter des " précurseurs " par exemple de nature organo-métallique, soit sous forme gazeuse, soit sous forme pulvérulente, soit liquide par eux-mêmes ou encore en solution dans un liquide, à la surface du substrat porté à haute température.

Lesdits précurseurs, à son contact, s'y décomposent en laissant par exemple une couche de métal, d'oxyde, d'oxynitrure ou de nitrure. L'avantage de la pyrolyse est bien appréhendé : il réside dans le fait qu'elle permet de réaliser le dépôt des couches directement sur le ruban de verre d'une ligne de fabrication de verre plat du type float, en continu, et également dans le fait que les couches pyrolysées présentent une forte adhérence au substrat.

Parmi ces couches, il est connu depuis fort longtemps que les couches à base d'oxyde d'étain sont particulièrement intéressantes car leurs propriétés, notamment électriques et optiques, rendent les substrats verriers revêtus utilisables pour bon nombre d'applications.

Plusieurs précurseurs d'étain ont déjà été testés avec succès dans le passé, en particulier ceux pouvant être vaporisés à la surface du verre chaud selon une des techniques précitées appelée pyrolyse en phase gazeuse ou CVD en anglais (Chemical Vapor Deposition).

Pour améliorer les propriétés électriques de ces couches à base d'oxyde d'étain, mentionnées plus haut, on a cherché à y incorporer un ou plusieurs dopants. Plusieurs matériaux ont été largement essayés à ce titre, mais l'élément qui s'est avéré être le plus adapté pour l'oxyde d'étain est le fluor.

Dans un souci permanent d'efficacité de dopage, des efforts ont alors été consentis pour formuler à partir d'un précurseur d'étain donné, un précurseur de fluor qui soit le plus en adéquation avec ce dernier, plus particulièrement lorsque le dépôt est effectué par pyrolyse en phase gazeuse (CVD).

A ce jour, les formulations nombreuses qui ont été faites conduisent à des dépôts de couches du type précité SnO₂:F sur substrats verriers par pyrolyse en phase gazeuse globalement satisfaisants en termes de qualité et de niveau de performances optiques et/ou électriques atteint.

Cependant, quelle que soit la nature chimique et la forme physique de chacun des précurseurs de fluor et d'étain, aucun procédé de dépôt de couches formées sur substrats verriers, à partir de ceux-ci, n'atteint un rendement suffisant.

En effet, pour obtenir une épaisseur de couche SnO₂:F déterminée, la quantité de précurseur d'étain nécessaire est importante.

Le but que s'est alors fixée l'invention a été d'améliorer le rendement du procédé de dépôt d'une couche à base d'oxyde d'étain dopé au fluor SnO₂:F sur un substrat verrier par pyrolyse en phase gazeuse, notamment sans nuire à la qualité de dépôt et au niveau de performances optiques et/ou électriques atteint.

Pour ce faire, l'invention a pour objet un procédé de dépôt d'une couche à base d'oxyde métallique contenant du fluor, notamment une couche d'oxyde d'indium dopé au fluor, ou une couche d'oxyde d'étain dopé au fluor du type SnO₂:F, sur un substrat en verre par pyrolyse en phase gazeuse à partir d'au moins deux précurseurs dont au moins un précurseur de métal et au moins un précurseur de fluor. Selon l'invention, le précurseur de fluor comprend du trifluorure d'azote NF₃.

Selon une caractéristique de l'invention, dans le cas où la couche visée est à base d'oxyde d'étain dopé au fluor SnO₂:F, le précurseur de métal contient de l'étain Sn.

Par ce choix sélectif de précurseur de fluor, le rendement de dépôt du procédé précité a été considérablement augmenté par rapport aux procédés selon l'état de l'art. On précise, que, dans le cadre de l'invention, il faut comprendre par " rendement de dépôt " le rapport entre l'épaisseur de la couche obtenue et la quantité d'étain nécessaire à l'obtention de cette couche.

En outre, une telle augmentation ne s'est pas faite au détriment du niveau de performances optiques et électriques de la couche obtenue.

Enfin, le procédé selon l'invention ne nuit pas à la qualité de la couche obtenue, la décomposition du précurseur de fluor sélectionné ne laissant aucune impureté dans celle-ci.

Selon une caractéristique très avantageuse de l'invention, le précurseur d'étain est sous la forme Sn Rₓ Cl₄₋ₓ, avec R un radical hydrocarboné linéaire ou ramifié ayant de préférence 1à 6 C. Il peut s'agir de diméthyldichlorure d'étain Me₂ SnCl₂ ou de monobutylchlorure d'étain.

Un tel précurseur permet en combinaison avec le précurseur de fluor selon l'invention, d'atteindre un niveau de performances électriques de la couche SnO₂:F obtenue encore accru par rapport à ceux déjà atteints selon l'état de l'art ou à ceux atteints avec un autre précurseur d'étain.

Bien évidemment, dans le cadre de l'invention, le précurseur d'étain peut être également choisi parmi le tétrachlorure d'étain SnCl₄, le monobutyltrichlorure d'étain C₄H₉SnCl₃, désigné ci-après sous le terme MBTCI.

De préférence, on effectue le dépôt conforme à l'invention sur le substrat en verre à une température comprise entre 400 et 800°C, notamment entre 550 et 750°C.

Cette gamme de températures est particulièrement avantageuse dans la mesure où elle est compatible avec un dépôt sur ligne float.

Avantageusement, le rapport de moles de la quantité de précurseur de fluor sur la quantité de précurseur métallique, notamment d'étain, est compris entre 0,1 et 20 %.

Il est préférable, selon l'invention, en particulier lorsque le précurseur métallique, notamment en étain, ne contient pas d'oxygène, d'effectuer le dépôt conforme à l'invention avec au moins un composé à caractère oxydant du type O₂ et/ou H₂O.

Il est également préférable d'effectuer le dépôt de la couche à base d'oxyde métallique, notamment d'oxyde d'étain dopé au fluor SnO₂:F, en continu sur un ruban de verre float.

En particulier, lorsque le substrat en verre est du type silico-sodo-calcique, le dépôt conforme à l'invention est effectué avantageusement entre le bain float et l'étenderie.

Lorsque le substrat en verre est d'une composition chimique adaptée à la fabrication d'écrans à plasma, le dépôt conforme à l'invention est de préférence effectué dans l'enceinte du bain float ou dans l'étenderie.

L'invention concerne également un substrat verrier revêtu d'une couche à base d'oxyde d'étain dopé au fluor SnO₂:F obtenu conformément au procédé précité. Ce substrat est remarquable en ce que la couche présente une résistance par carré d'au plus 100 Ω, le substrat revêtu présentant une transmission lumineuse T_{L} d'au moins 75 %.

Selon une caractéristique, la couche à base d'oxyde d'étain dopé au fluor SnO₂:F peut faire partie d'un empilement du type :

verre/SiOₓN_{Y}C_{z}/SnO₂:F.

Dans ce type d'empilement, la sous-couche peut avantageusement être d'indice de réfraction et d'épaisseur géométrique sélectionnés afin d'ajuster notamment l'aspect optique du substrat, en particulier en réflexion.

A cet effet, la couche à base d'oxyde d'étain dopé au fluor SnO₂:F peut être avantageusement associée à une couche anti-irisation.

Une couche en SiOₓN_{Y}C_{z} particulièrement appropriée à ce type d'empilement est celle décrite dans la demande de brevet français FR 97/01 468 déposée par la demanderesse le 10 février 1997 publiée sous le numéro FR-2 759 362 et équivalent au brevet européen EP-0 857 700. Une telle couche présente en effet l'avantage d'être particulièrement résistante d'un point de vue mécanique.

Selon une variante avantageuse (lorsque y est nul) la couche en SiOC associée à la couche selon l'invention peut être obtenue par pyrolyse en phase gazeuse, notamment à partir de silane et d'éthylène comme décrit dans la demande de brevet EP-0 518 755.

Elle est également avantageuse, notamment lorsque la couche SnO₂:F selon l'invention est destinée à faire partie d'électrodes, en particulier lorsque l'équipement de faces avant d'écrans émissifs est visé.

La couche à base de Si Oₓ N_{y} C_{z} précitée permet d'éviter la diffusion des alcalins du verre vers la couche conductrice conforme à l'invention et, donc de protéger cette dernière.

Les sous-couches évoquées plus haut peuvent être homogènes dans leur épaisseur mais elles peuvent également présenter une certaine inhomogénéité en composition dans leur épaisseur, par exemple afin d'en moduler l'indice de réfraction et permettre une compatibilité optique et/ou chimique optimale avec la couche SnO₂:F située au-dessus obtenue conformément à l'invention.

Cette couche à "gradient" peut être obtenue à partir de la même technique de dépôt que celle conforme à l'invention SnO₂:F, c'est-à-dire par pyrolyse en phase gazeuse, mais en utilisant une buse apte à créer des gradients chimiques telle que celle décrite dans la demande de brevet FR-2 736 632.

Pour ce qui est de l'épaisseur de la couche SnO₂:F conforme à l'invention, elle dépend bien évidemment des applications visées.

Lorsque le substrat précédemment défini est utilisé pour fabriquer des vitrages de protection solaire du type filtrants et/ou bas émissifs ou pour fabriquer des parties vitrées d'appareils électroménagers, du type porte de four, de réfrigérateur, la couche a préférentiellement une épaisseur géométrique d'au moins 250 nm.

Lorsque le substrat conforme à l'invention est utilisé pour fabriquer des faces " avant et/ou " arrière " d'écrans émissifs du type écrans plats tels qu'écrans à plasma, il est de préférence d'une composition chimique comprenant les constituants ci-après, en proportions pondérales :

| | |
|---|---|
| SiO₂ | 55-65 % |
| Al₂O₃ | 0-5 % |
| ZrO₂ | 5-10 % |
| B₂O₃ | 0-3 % |
| Na₂O | 2-6 % |
| K₂O | 5-9 % |
| MgO | 0-6 % |
| CaO | 3-11 % |
| SrO | 4-12 % |
| BaO | 0-2 % |
| avec Na₂O + K₂O | ≥10 % |
| MgO + CaO + SrO + BaO | >11 % |

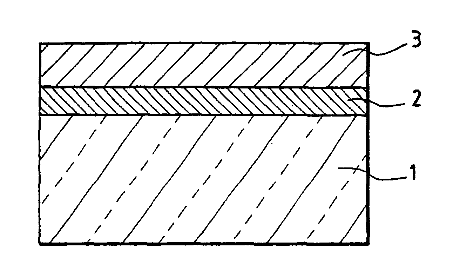

D'autres détails et caractéristiques avantageuses ressortiront ci-après à la lecture d'exemples de réalisation illustratifs de l'invention, mais non limitatifs, faite en référence à la figure unique.

On précise tout d'abord, que par souci de clarté, cette figure ne respecte pas les proportions concernant les épaisseurs relatives des différents matériaux.

La figure unique représente un substrat de verre 1 silico-sodo-calcique clair de 4 millimètres d'épaisseur, par exemple celui commercialisé sous la marque PLANILUX par la Société SAINT-GOBAIN VITRAGE, recouvert d'une couche mince 2 à base d'oxycarbure de silicium SiOC d'indice de réfraction égal à 1,7 surmontée d'une couche 3 à base d'oxyde d'étain dopé au fluor SnO₂:F.

Dans tous les exemples suivants, le dépôt de cette dernière est effectué par une technique de pyrolyse en phase gazeuse par l'intermédiaire d'une buse adaptée, connue en soi.

Celle-ci est placée, soit dans un four à substrat statique (exemples 1 et 2), soit dans un four à défilement (exemples 3 à 6).

On précise que dans chacun des cas, l'atmosphère régnant dans le four, c'est-à-dire celle avec laquelle la couche SnO₂:F obtenue se trouve en contact, est à base d'azote N₂.

On précise également que, préalablement au dépôt de la couche SnO₂:F, le substrat en verre est revêtu de la couche d'oxycarbure de silicium précitée selon la technique décrite dans le brevet EP 0 518 755.

Les exemples 1, 3 et 5 sont réalisés conformément à l'invention.

Les exemples 2, 4 et 6 selon l'état de l'art sont donnés à titre d'exemples comparatifs.

Les conditions opératoires mises en oeuvre pour effectuer le dépôt sont détaillées ci-après pour chacun des exemples.

### Exemples 1 et 2

Le substrat en verre est posé sur un suscepteur métallique qui est placé à l'intérieur d'un tube en quartz.

L'intérieur de ce tube est alors chauffé par l'intermédiaire de lampes à infrarouge et amené à une température de l'ordre de 630°C. Les parois en quartz quant à elles restent beaucoup plus froides.

Dans ces exemples, le précurseur d'étain utilisé est diméthyldichlorure d'étain Me₂SnCl₂.

Celui-ci est vaporisé selon une technique dite de barbotage. Le précurseur d'étain est placé dans un barboteur à l'intérieur duquel un gaz vecteur, en l'occurrence de l'azote N₂, passe. Le gaz vecteur N₂ est ainsi diffusé à travers le précurseur d'étain et sort du barboteur saturé de vapeur du précurseur d'étain.

Le précurseur d'étain Me₂SnCl₂ est maintenu à une température de l'ordre de 115°C pendant le barbotage.

Le débit d'azote vecteur est maintenu constant à 0,1 l/min.

Dans l'exemple 1, le précurseur (dopant) de fluor utilisé est conformément à l'invention, du trifluorure d'azote NF₃. Celui-ci est dilué dans de l'azote N₂ à une concentration de l'ordre de 10 %.

Dans l'exemple 2, le précurseur (dopant) de fluor utilisé est de l'acide trifluorocétique CF₃COOH placé dans un barboteur dans les mêmes conditions que précédemment et maintenu à une température de l'ordre de -10°C lors du barbotage.

Dans chacun de ces exemples, le gaz vecteur chargé en précurseur d'étain est mélangé avec des flux d'oxygène et de vapeur d'eau dans un barboteur maintenu à 2°C.

Le tableau 1 ci-dessous récapitule la nature des précurseurs d'étain et de fluor utilisés :

**TABLEAU 1**

| | **EXEMPLE 1** | **EXEMPLE 2** |
|---|---|---|
| Nature du précurseur d'étain (A) | diméthyldichlorure d'étain Me₂SnCl₂ | diméthyldichlorure d'étain Me₂SnCl₂ |
| Nature du précurseur du fluor (B) | trifluorure d'azote NF₃ | acide trifluoroacétique CF₃COOH |

Le tableau 2 ci-dessous précise pour les exemples 1 et 2 respectivement les débits de flux d'oxygène O₂ et d'azote vecteur dans la vapeur d'eau H₂O en l/min, le débit du précurseur de fluor en l/min, l'épaisseur (e) en nanomètres de la couche SnO₂:F obtenue, le temps de dépôt en minute mis pour déposer l'épaisseur (e) de la couche précitée. Il donne également la valeur de la transmission lumineuse T_{L} en pourcentages mesurée selon l'illuminant D₆₅ ainsi que la valeur de la résistivité ρ en Ohm.cm.

**TABLEAU 2**

| | **EXEMPLE 1** | **EXEMPLE 2** |
|---|---|---|
| Débit d'O₂ (l/min) | 0,4 | 0,4 |
| Débit d'azote vecteur dans la vapeur d'eau (l/min) | 0,1 | 0,1 |
| Débit du précurseur de fluor (l/min) | 0,05 | 0,1 |
| Temps de dépôt | 1 min 30 s | 4 min 30 s |
| Epaisseur (e) de la couche SnO₂:F | 300 | 315 |
| T_{L} (%) | 82,9 | 83,5 |
| Résistivité ρ (Ohm.cm) | 3,9.10⁻⁴ | 4,0.10⁻⁴ |

De ce tableau, il ressort clairement que le rendement de dépôt est bien meilleur pour l'exemple 1 conforme à l'invention que l'exemple 2 et donc que le trifluorure d'azote NF₃ améliore considérablement celui-ci lorsque le précurseur d'étain utilisé est le diméthyldichlorure d'étain Me₂SnCl₂.

En effet, la vitesse de dépôt (rapport entre l'épaisseur e de la couche SnO₂:F obtenue et le temps de dépôt) est augmentée d'un rapport d'environ 2,85 pour un même débit d'azote dans Me₂SnCl₂ égal à 0,1 l/min.

Cette augmentation de la vitesse de dépôt ne s'est pas faite au détriment des performances optiques et électriques qui sont tout à fait identiques dans les deux exemples précités.

### EXEMPLES 3 à 6

Le substrat en verre est placé dans un four à défilement et est déplacé à une vitesse de l'ordre de 40 cm/min. De plus, la température du verre est maintenue aux alentours de 620°C.

La technique de barbotage est la même que celle utilisée dans les exemples 1 et 2.

### EXEMPLE 3

Le précurseur d'étain utilisé est le diméthyldichlorure d'étain Me₂SnCl₂ maintenu à une température de l'ordre de 120°C pendant le barbotage.

Le précurseur de fluor utilisé est, conformément à l'invention, le trifluorure d'azote NF₃ dilué dans de l'azote N₂ à une concentration de l'ordre de 10 %. Le gaz vecteur N₂ chargé en diméthyldichlorure d'étain Me₂SnCl₂ est mélangé avec des flux d'oxygène O₂ et de vapeur d'eau.

### EXEMPLE 4

Le précurseur d'étain utilisé est le diméthyldichlorure d'étain Me₂SnCl₂ maintenu dans des conditions de température identiques à l'exemple 3.

Le précurseur de fluor utilisé est l'acide trifluoroacétique CF₃COOH maintenu à une température de l'ordre de 40°C. Le gaz vecteur N₂ chargé en diméthyldichlorure d'étain Me₂SnCl₂ à des flux O₂ et de vapeur d'eau H₂O strictement identiques à ceux de l'exemple 3.

### EXEMPLE 5

Le précurseur d'étain utilisé est le monobutyltrichlorure d'étain MBTCI maintenu à une température de 145°C pendant le barbotage. Le précurseur de fluor utilisé est, conformément à l'invention, le trifluorure d'azote NF₃ dilué dans de l'azote N₂ à une concentration de 10 %. Le gaz vecteur N₂ chargé en MBTCI est mélangé avec des flux d'oxygène O₂ et de vapeur d'eau H₂O maintenue à 40°C.

### EXEMPLE 6

Le précurseur d'étain utilisé est celui utilisé pour l'exemple 5 dans les mêmes conditions de température. Le précurseur de fluor utilisé est l'acide trifluoroacétique CF₃COOH maintenu à une température de 40°C.

Le gaz vecteur N₂ chargé en précurseur d'étain est mélangé avec des flux d'oxygène O₂ et de vapeur d'eau maintenue à 40°C.

Le tableau 3 ci-dessous récapitule la nature des précurseurs d'étain et de fluor utilisés dans les différents exemples 3 à 6:

**TABLEAU 3**

| | **EXEMPLE 3** | **EXEMPLE 4** | **EXEMPLE 5** | **EXEMPLE 6** |
|---|---|---|---|---|
| Nature du précurseur d'étain | Me₂SnCl₂ | Me₂SnCl₂ | MBTCl | MBTCl |
| Nature du précurseur de fluor | NF₃ | CF₃COOH | NF₃ | CF₃COOH |

. Le tableau 4 ci-dessous indique pour chacun des exemples 3 à 6 respectivement les débits de flux d'oxygène O₂ et d'azote vecteur dans la vapeur d'eau H₂O en l/min, le débit du précurseur de fluor en l/min, le débit du précurseur d'étain en l/min, l'épaisseur (e) en nanomètres de la couche SnO₂:F obtenue.

Il donne également la valeur de la transmission lumineuse T_{L} en pourcentages mesurée selon l'illuminant D₆₅ ainsi que la valeur de résistivité ρ en Ohm.cm.

**TABLEAU 4**

| | **EXEMPLE 3** | **EXEMPLE 4** | **EXEMPLE 5** | **EXEMPLE 6** |
|---|---|---|---|---|
| Débit d'O₂ (l/min) | 1,7 | 2,3 | 3,0 | 3,2 |
| Débit d'azote vecteur dans la vapeur d'H₂O (l/min) | 0,5 | 0,5 | 0,4 | 0.5 |
| Débit du précurseur de fluor (l/min) | 0,05 | 0,075 | 0,1 | 0.05 |
| Débit du précurseur d'étain (l/min) | 1,1 | 1,9 | 1,6 | 2,7 |
| Epaisseur (e) de la couche SnO₂:F obtenue (nm) | 330 | 330 | 330 | 330 |
| T_{L} (%) | 82,6 | 82,8 | 83,1 | 82,5 |
| ρ (Ohm.cm) | 4,7.10⁻⁴ | 4,9.10⁻⁴ | 5,2.10⁻⁴ | 5,3.10⁻⁴ |

En comparant respectivement d'une part l'exemple 3 selon l'invention à l'exemple 4 et d'autre part l'exemple 5 selon l'invention à l'exemple 6, on constate que :
- le précurseur selon l'invention NF₃ augmente le rendement de dépôt puisque pour une épaisseur de couche SnO₂:F donnée (330 nm) la quantité de précurseur d'étain utilisée (proportionnelle au débit) est bien moindre.
- cette augmentation du rendement de dépôt ne s'est pas faite au détriment des performances optiques et électriques.

En outre, il a été vérifié que les exemples 3 et 5 suivant l'invention conduisent à un encrassement de la buse utilisée bien moindre que ceux habituellement constatés.

Il a été observé que les couches obtenues conformément à l'invention étaient, à épaisseurs égales, moins absorbantes que les couches obtenues conformément à l'art antérieur. Ainsi, la transmission lumineuse de l'exemple 5 est un peu supérieure à celle de l'exemple 6, ce qui traduit une absorption plus faible.

Par ailleurs, il a été aussi observé que les couches obtenues selon l'invention avaient des propriétés électriques identiques et même parfois supérieures à celles obtenues conformément à l'art antérieur.

En dernier lieu, les exemples 3 à 6 ont été refaits en augmentant la vitesse de défilement du substrat jusqu'à 1 m/mn afin de se rapprocher des vitesses de défilement du ruban de verre float d'une ligne industrielle; il a été vérifié que les couches selon l'invention conservaient les mêmes avantages, à savoir un rendement meilleur à performances optiques et électriques semblables voire meilleures.

En conclusion, l'invention a mis au point un procédé de dépôt d'une couche à base d'oxyde d'étain dopé au fluor SnO₂:F au rendement amélioré, sans que cela nuise aux performances électriques et optiques de la couche.

## Revendications

1. Procédé de dépôt sur un substrat verrier d'une couche à base d'oxyde métallique contenant du fluor, ladite couche étant une couche d'oxyde d'Indium dopé au fluor ou une couche d'oxyde d'étain dopé au fluor SnO₂:F, par une technique de pyrolyse en phase gazeuse à partir d'au moins deux précurseurs dont au moins un précurseur de métal et au moins un précurseur de fluor, **caractérisé en ce que** ledit précurseur de fluor comprend du trifluorure d'azote NF₃.

2. Procédé selon la revendication précédente, **caractérisé en ce que** le précurseur de fluor consiste essentiellement en trifluorure d'azote NF₃.

3. Procédé selon l'une des revendications précédentes, **caractérisé en ce qu'**une couche d'oxyde d'étain dopé au fluor SnO₂:F est déposée et **en ce que** le précurseur de métal contient de l'étain Sn.

4. Procédé selon la revendication précédente, **caractérisé en ce que** le précurseur d'étain est de formule SnRₓCl₄₋ₓ, R représentant un radical hydrocarboné linéaire ou ramifié ayant 1 à 6 C et x allant de 0 à 2.

5. Procédé selon la revendication précédente, **caractérisé en ce que** le précurseur d'étain est le diméthyldichlorure d'étain Me₂SnCl₂.

6. Procédé selon la revendication 4, **caractérisé en ce que** le précurseur d'étain est le monobutyltrichlorure d'étain.

7. Procédé selon l'une des revendications précédentes, **caractérisé en ce que** l'on effectue le dépôt à une température comprise entre 400 et 800°C.

8. Procédé selon la revendication précédente, **caractérisé en ce que** l'on effectue le dépôt à une température comprise entre 550°C et 750°C.

9. Procédé selon l'une des revendications 3 à 8, **caractérisé en ce que** le rapport de moles de la quantité de précurseur de fluor sur la quantité de précurseur(s) d'étain est compris entre 0,1 % et 20 %.

10. Procédé selon l'une des revendications 3 à 9, **caractérisé en ce que** l'on effectue le dépôt de la couche à base d'oxyde d'étain dopé au fluor SnO₂:F avec au moins un composé à caractère oxydant du type O₂ et/ou H₂O.

11. Procédé selon l'une des revendications précédentes, **caractérisé en ce que** l'on effectue le dépôt en continu sur un ruban de substrat verrier, notamment dans l'enceinte du bain float ou dans l'étendrie.

12. Procédé selon l'une des revendications 3 à la précédente, **caractérisé en ce que** ladite couche présente une résistance par carré d'au plus 100 Ω et **en ce que** ledit substrat revêtu présente une transmission lumineuse T_{L} d'au moins 75 %.

13. Procédé selon l'une des revendications 3 à la précédente, **caractérisé en ce que** ladite couche à base d'oxyde d'étain dopé au fluor SnO₂:F fait partie d'un empilement du type verre/SiOₓN_{y}C_{z}/SnO₂:F , la couche en SiOₓN_{y}C_{z} comprenant les éléments Si, O, N, C dans les pourcentages atomiques suivants :
- Si : de 30 à 60 %
- N : de 10 à 56 %
- O : de 1 à 40 %
- C : de 1 à 40 %

14. Procédé selon l'une des revendications 3 à 12, **caractérisé en ce que** ladite couche à base d'oxyde d'étain dopé au fluor SnO₂:F fait partie d'un empilement du type verre/SiOC/SnO₂:F.

15. Procédé selon l'une des revendications 3 à la précédente, **caractérisé en ce que** la couche à base d'oxyde d'étain dopé au fluor SnO₂:F a une épaisseur géométrique d'au moins 250 nm.

16. Procédé selon l'une des revendications 3 à la précédente, **caractérisé en ce que** le substrat est d'une composition chimique comprenant les constituants ci-après, en proportions pondérales :
| | |
|---|---|
| SiO₂ | 55-65 % |
| Al₂O₃ | 0-5 % |
| ZrO₂ | 5-10 % |
| B₂O₃ | 0-3 % |
| Na₂O | 2-6 % |
| K₂O | 5-9 % |
| MgO | 0-6 % |
| CaO | 3-11 % |
| SrO | 4-12 % |
| BaO | 0-2 % |
| Na₂O + K₂O | ≥10 % |
| MgO + CaO + SrO + BaO | >11 % |

17. Procédé selon l'une des revendications 1 et 2, **caractérisé en ce que** l'on effectue le dépôt d'une couche d'oxyde d'Indium dopé au fluor.

## Patentansprüche

1. Verfahren zum Aufbringen einer Schicht auf der Basis eines Fluor enthaltenden Metalloxids, die eine Schicht aus mit Fluor dotiertem Indiumoxid oder mit Fluor dotiertem Zinnoxid, SnO₂:F, ist, ausgehend von wenigstens zwei Vorläufern, davon mindestens ein Metallvorläufer und mindestens ein Fluorvorläufer, durch ein Pyrolyseverfahren aus der Gasphase auf ein aus Glas bestehendes Substrat, **dadurch gekennzeichnet, dass** der Fluorvorläufer Stickstofftrifluorid, NF₃, umfasst.

2. Verfahren nach dem vorhergehenden Anspruch, **dadurch gekennzeichnet, dass** der Fluorvorläufer im Wesentlichen aus Stickstofftrifluorid, NF₃, besteht.

3. Verfahren nach einem der vorhergehenden Ansprüche, **dadurch gekennzeichnet, dass** eine Schicht aus mit Fluor dotiertem Zinnoxid, SnO₂:F, abgeschieden wird, **und dass** der Metallvorläufer Zinn, Sn, enthält.

4. Verfahren nach dem vorhergehenden Anspruch, **dadurch gekennzeichnet, dass** der Zinnvorläufer die Formel SnRₓCl₄₋ₓ besitzt, wobei R einen geradkettigen oder verzweigten Kohlenwasserstoffrest mit 1 bis 6 C bedeutet und x von 0 bis 2 geht.

5. Verfahren nach dem vorhergehenden Anspruch, **dadurch gekennzeichnet, dass** der Zinnvorläufer Dimethylzinndichlorid, Me₂SnCl₂, ist.

6. Verfahren nach Anspruch 4, **dadurch gekennzeichnet, dass** der Zinnvorläufer Monobutylzinntrichlorid ist.

7. Verfahren nach einem der vorhergehenden Ansprüche, **dadurch gekennzeichnet, dass** der Abscheidevorgang bei einer Temperatur von 400 bis 800 °C durchgeführt wird.

8. Verfahren nach dem vorhergehenden Anspruch, **dadurch gekennzeichnet, dass** der Abscheidevorgang bei einer Temperatur von 550 bis 750 °C durchgeführt wird.

9. Verfahren nach einem der Ansprüche 3 bis 8, **dadurch gekennzeichnet, dass** das Molverhältnis der Menge an Fluorvorläufer zur Menge an Zinnvorläufer/n 0,1 bis 20 % beträgt.

10. Verfahren nach einem der Ansprüche 3 bis 9, **dadurch gekennzeichnet, dass** die Schicht auf der Basis von mit Fluor dotiertem Zinnoxid, SnO₂:F, mit mindestens einer Verbindung mit oxidierendem Charakter vom Typ O₂ und/oder H₂O abgeschieden wird.

11. Verfahren nach einem der vorhergehenden Ansprüche, **dadurch gekennzeichnet, dass** der Abscheidevorgang kontinuierlich auf einem Band aus einem aus Glas bestehenden Substrat und insbesondere in der Floatglaswanne oder im Rollenkühlofen durchgeführt wird.

12. Verfahren nach einem der Ansprüche vom dritten bis zum vorhergehenden Anspruch, **dadurch gekennzeichnet, dass** der Flächenwiderstand der Schicht höchstens 100 Ω beträgt, und **dass** das beschichtete Substrat einen Lichttransmissionsgrad, T_{L}, von mindestens 75 % besitzt.

13. Verfahren nach einem der Ansprüche vom dritten bis zum vorhergehenden Anspruch, **dadurch gekennzeichnet, dass** die Schicht auf der Basis von mit Fluor dotiertem Zinnoxid, SnO₂:F, Bestandteil eines Aufbaus vom Typ Glas/SiOₓN_{y}C_{z}/SnO₂:F ist, wobei die SiOₓN_{y}C_{z}-Schicht die Elemente Si, O, N, C mit folgenden Atomprozenten enthält:
- Si: 30 bis 60 %
- N: 10 bis 56 %
- O: 1 bis 40 %
- C: 1 bis 40 %.

14. Verfahren nach einem der Ansprüche 3 bis 12, **dadurch gekennzeichnet, dass** die Schicht auf der Basis von mit Fluor dotiertem Zinnoxid, SnO₂:F, Bestandteil eines Aufbaus vom Typ Glas/SiOC/SnO₂:F ist.

15. Verfahren nach einem der Ansprüche vom dritten bis zum vorhergehenden Anspruch, **dadurch gekennzeichnet, dass** die geometrische Dicke der Schicht auf der Basis von mit Fluor dotiertem Zinnoxid, SnO₂:F, mindestens 250 nm beträgt.

16. Verfahren nach einem der Ansprüche vom dritten bis zum vorhergehenden Anspruch, **dadurch gekennzeichnet, dass** das Substrat eine chemische Zusammensetzung besitzt, die folgende Bestandteile in Gewichtsanteilen umfasst:
| | |
|---|---|
| SiO₂ | 55 bis 65 % |
| Al₂O₃ | 0 bis 5 % |
| ZrO₂ | 5 bis 10 % |
| B₂O₃ | 0 bis 3 % |
| Na₂O | 2 bis 6 % |
| K₂O | 5 bis 9 % |
| MgO | 0 bis 6 % |
| CaO | 3 bis 11 % |
| SrO | 4 bis 12 % |
| BaO | 0 bis 2 % |
| Na₂O + K₂O | ≥10 % |
| MgO + CaO + SrO + BaO | >11 %. |

17. Verfahren nach Anspruch 1 oder 2, **dadurch gekennzeichnet, dass** eine Schicht aus mit Fluor dotiertem Indiumoxid abgeschieden wird.

## Claims

1. Method of depositing a layer based on a fluorine-containing metal oxide on a glass substrate, the said layer being a layer of fluorine-doped indium oxide or a layer of fluorine-doped tin oxide SnO₂:F, by a gas phase pyrolysis technique using at least two precursors, including at least one metal precursor and at least one fluorine precursor, **characterised in that** the said fluorine precursor comprises nitrogen trifluoride NF₃.

2. Method according to the preceding claim, **characterised in that** the fluorine precursor consists essentially of nitrogen trifluoride NF₃.

3. Method according to one of the preceding claims, **characterised in that** a layer of fluorine-doped tin oxide SnO₂:F is deposited and **in that** the metal precursor contains tin Sn.

4. Method according to the preceding claim, **characterised in that** the tin precursor is of the formula SnRₓCl₄₋ₓ, R representing a linear or branched hydrocarbon radical having 1 to 6 carbon atoms and x ranging from 0 to 2.

5. Method according to the preceding claim, **characterised in that** the tin precursor is dimethyltin dichloride Me₂SnCl₂.

6. Method according to Claim 4, **characterised in that** the tin precursor is monobutyltin trichloride.

7. Method according to one of the preceding claims, **characterised in that** the deposition is carried out at a temperature of between 400°C and 800°C.

8. Method according to the preceding claim, **characterised in that** the deposition is carried out at a temperature of between 550°C and 750°C.

9. Method according to one of Claims 3 to 8, **characterised in that** the molar ratio of the quantity of fluorine precursor to the quantity of tin precursor or precursors is between 0.1% and 20%.

10. Method according to one of Claims 3 to 9, **characterised in that** the deposition of the layer based on fluorine-doped tin oxide SnO₂:F is carried out with at least one compound with an oxidising character, of the O₂ and/or H₂O type.

11. Method according to one of the preceding claims, **characterised in that** the deposition is carried out continuously on a ribbon of glass substrate, in particular in the float bath chamber or in the lehr.

12. Method according to one of Claims 3 to the previous one, **characterised in that** the said layer has a resistance per square of at most 100 Ω and **in that** the said coated substrate has a light transmission T_{L} of at least 75%.

13. Method according to one of Claims 3 to the preceding one, **characterised in that** the said layer based on fluorine-doped tin oxide SnO₂:F forms part of a stack of the glass/SiOₓN_{y}C_{z}/SnO₂:F type, the layer of SiOₓN_{y}C_{z} comprising the elements Si, O, N, C in the following atomic percentages:
- Si: from 30% to 60%
- N: from 10% to 56%
- O: from 1% to 40%
- C: from 1% to 40%.

14. Method according to one of Claims 3 to 12, **characterised in that** the said layer based on fluorine-doped tin oxide SnO₂:F forms part of a stack of the glass/SiOC/SnO₂:F type.

15. Method according to one of Claims 3 to the preceding one, **characterised in that** the layer based on fluorine-doped tin oxide SnO₂:F has a geometrical thickness of at least 250 nm.

16. Method according to one of Claims 3 to the preceding one, **characterised in that** the substrate has a chemical composition comprising the following constituents, in proportions by weight:
| | |
|---|---|
| SiO₂ | 55-65% |
| Al₂O₃ | 0-5% |
| ZrO₂ | 5-10% |
| B₂O₃ | 0-3% |
| Na₂O | 2-6% |
| K₂O | 5-9% |
| MgO | 0-6% |
| CaO | 3-11% |
| SrO | 4-12% |
| BaO | 0-2% |
| Na₂O + K₂O | ≥10% |
| MgO + CaO + SrO + BaO | >11%. |

17. Method according to one of Claims 1 and 2, **characterised in that** the deposition of a layer of fluorine-doped indium oxide is carried out.
